# EUROPEAN PATENT APPLICATION

(11) **EP 3 407 011 A1**
(43) Date of publication of application: **28.11.2018**
(21) Application number: 16885484.2
(22) Date of filing: 19.05.2016
(51) Int. Cl.: G01B 21/00

(54) **METHOD FOR MEASURING AND EVALUATING GEAR PRECISION**

(30) Priority: 21.01.2016 CN 201610041995
(71) Applicant: Shenzhen Hisym Industry Co., Ltd., Shenzhen, Guangdong 518106 (CN)
(72) Inventor: ZHANG, Haichen, Shenzhen Guangdong 518106 (CN)
(74) Representative: Sun, Yiming
(86) International application number: PCT/CN2016/000271
(87) International publication number: WO 2017/124211

(57) **Abstract**

The invention discloses a method for measuring and evaluating gear precision. The method includes steps of scanning a tested gear and building up an actual model of the tested gear via scanned data; overlapping the actual model of the tested gear with a standard 3D model; selecting a section of the overlapped model to compare; judging if the point on the actual model section exceeds a tolerance zone selected on the actual model. The method makes the measurement data of the gear direct, visible, simple and easily-understood, and needs not too professional technological background; the method needs not professional measuring device of the gear so that the investment to professional instruments can be reduced; the data information is comprehensive, and every data characteristic of the gear face can be completely controlled; the tested data can be directly read to design or use in analysis software; the efficiency is high and the method can be used for online measurement of gear spare parts in volume production, thus the product quality is easy to manage; moreover, the method can be applicable to the data systematic management of the gear product, tracking and analysis of complex data.

## Description

### Technical Field

The invention relates to the measurement field of a gear; more exactly, the invention particularly relates to a method for measuring and evaluating gear precision. Through the method, precisions of various gears, such as metal gear, plastic gear, sintering gear, ultra-big gear, ultra-small gear, and others can be measured and evaluated.

### Background Technology

The widely applied evaluating method of gear precision at present is set upon the basis of the traditional metal gear, the generating method processing principle of a gear hobbing machine or a gear grinding machine; generally, the following two methods are applied: The first type: special instruments of the gear measurement center shall carry out the analysis and evaluation expressions of over five items including tooth error, point direction error, tooth space error, eccentric bias and span of measuring ball, and dozens and hundreds of data; these data can be read, judged and used by very professional technicians with long working experience; besides, the measurement instrument is special gear device, and only possessed by large-scale professional gear manufacturer with high price and low measurement efficiency; so the measurement instrument is hard to widely apply.

The second type: a gear double-face meshing machine is low in price, simple in operation, high in efficiency, and easy to be widely applied; but many standard teeth are required to purchase to measure the multiple gears with different specifications. The standard gears are relatively high in price, and only can provide few evaluation data such as single-tooth bias, full-tooth comprehensive bias, eccentric bias, maximum value, minimum value and mean value of center distance; the standard gear cannot comprehensively express the gear bias, technicians are very hard to directly use the provided bias data to correct technique and process.

In summary, above two methods have the following disadvantages and shortcomings: 1, data of the gear tooth face is not comprehensive; 2, the bias expression method is not intuitional and generally expressed by a schematic line; 3, these data can be mastered and applied by very professional people; 4, professional instruments need professional operators, so that the test is very limited; 5, efficiency of two measurement methods is low, and the methods only can be used for the sampling inspection instead of online full inspection and systematic management of volume production; therefore, the methods are disagreed with the demand of high-end industry at present and in future.

### Summary of the Invention

For solving problems existed in the prior art, the invention provides a method for measuring and evaluating gear precision.

In order to realize the purpose, the technical scheme of the invention is: A method for measuring and evaluating gear precision, which is characterized by including the steps of:
a) scanning a tested gear and building up an actual model of the tested gear via scanned data;
b)overlapping the actual model of the tested gear with a standard 3D model;
c)selecting a section of the overlapped model to compare;
d)judging if the point on the actual model section exceeds a tolerance zone selected on the actual model.

Preferably, in step a), the tested gear is performed with circumferential scanning, face-line scanning or holographic data scanning.

Preferably, in step b), the overlapping is performed with axis of the standard 3D model according to the actual model.

Preferably, in step c), sections of multiple positions are selected to compare.

Preferably, in step c), the actual model is at least selected to compare with the section in the middle of the standard 3D model.

The invention further provides a method for measuring and evaluating gear precision, which is characterized by including the steps of:
a) scanning a tested gear and building up an actual model of the tested gear via scanned data;
b)overlapping the actual model of the tested gear with a standard 3D model;
c)selecting a section of the overlapped model to compare;
d)judging if the point on the actual model section exceeds a tolerance zone selected on the actual model until the minimum tolerance zone corresponding to the actual model is selected; and ranking the tested gear according to the minimum tolerance zone.

Preferably, in step b), overlapping the actual model of the tested gear with the standard 3D model;

Preferably, in step c), selecting a section of the overlapped model to compare;

Preferably, in step c), the actual model is at least selected to compare with the section in the middle of the standard 3D model.

The method makes the measurement data of the gear direct, visible, simple and easily-understood, and needs not too professional technological background; the method needs not professional measuring device of the gear so that the investment to professional instruments can be reduced; the data information is comprehensive, and every data characteristic of the gear face can be completely controlled; the tested data also can be directly read to design or use in analysis software; the efficiency is high and the method can be used for online measurement of gear spare parts in volume production, thus the product quality is easy to manage; moreover, the method can be applicable to the data systematic management of the gear product, tracking and analysis of complex data.

### Description of Attached Figures

Figure 1 represents schematic diagram of the gear model selection position in the method.
Figure 2 represents a profile map of a first assistant face.
Figure 3 represents a local method diagram of A position in Figure 2.
Figure 4 represents a profile map of the second assistant face.
Figure 5 represents a local method diagram of B position in Figure 4.
Figure 6 represents a profile map of third assistant face.
Figure 7 represents a local method diagram of C position in Figure 6.

### Specific Implementation

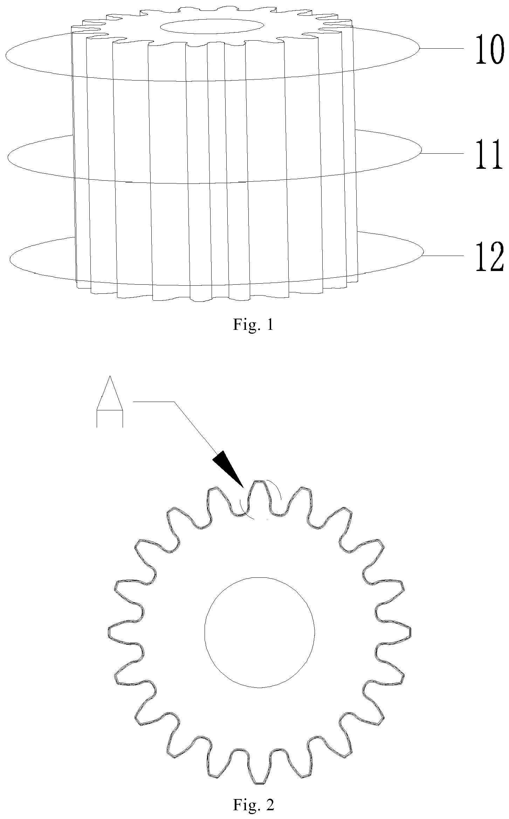

In order to make that the technical problem solved by the invention, the applied technical plan and the achieved technical effect are easy to understand, the below will further descript the specific embodiment by combining with the specific attached figure:
The invention provides a method for measuring and evaluating gear precision, which includes the following steps:
a) scanning a tested gear and building up an actual model of the tested gear via scanned data; wherein the tested gear can be placed on a measuring device with circumferential outline and face outline to obtain the linear outline and face outline data, or real and available holographic data can be acquired through optical, ray, electromagnetic, electronic beam and other measuring and scanning devices with three-dimensional digital imaging ability, such as CT scanning measuring instrument and scanning electron microscope;
b) overlapping the actual model of the tested gear with a standard 3D model; a correct 3D model can be directly used, and if the gear only has gear parameter, a correct three-dimensional gear digital analogy can be set up by the gear parameter firstly; the overlapping can be carried out with the standard 3D model according to the actual model;
c) selecting a section of the overlapped model to compare; sections of one position or multiple positions can be selected to compare; by referring to Figure 1, for example, the middle part of the actual model and the standard 3D model is used as the first assistant face 11, one position of the lower part of the middle position is used as the second assistant face 12, and one position above the middle position is used as the third assistant face 10; multiple assistant faces 10 are selected to compare, thus the measurement accuracy can be improved;
d) judging if the point on the actual model section exceeds a tolerance zone selected on the actual model.

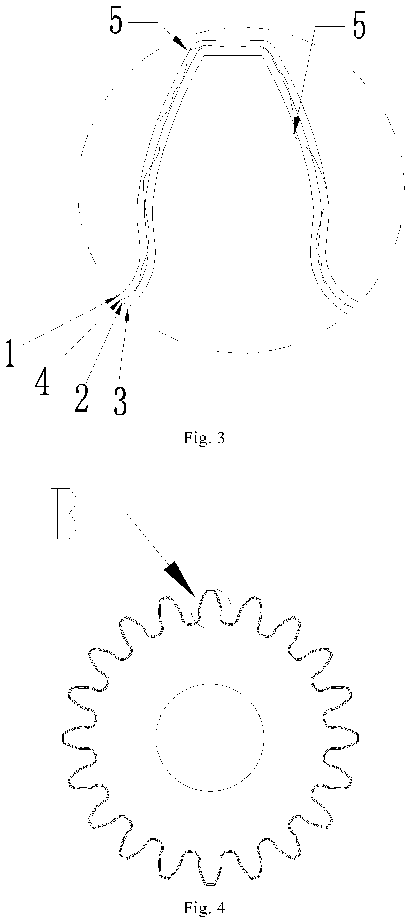

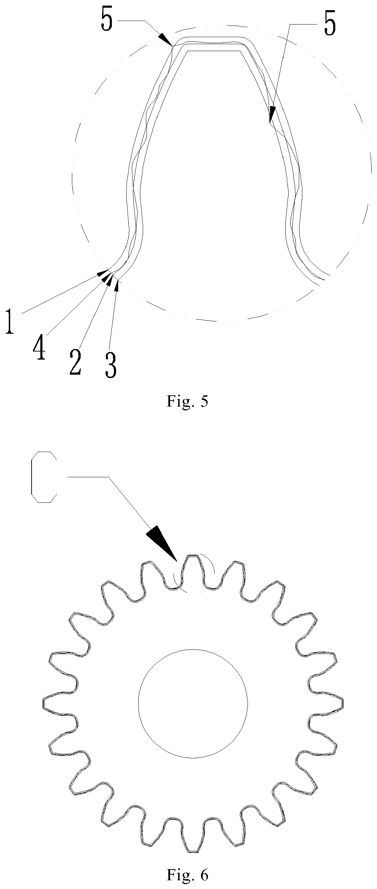

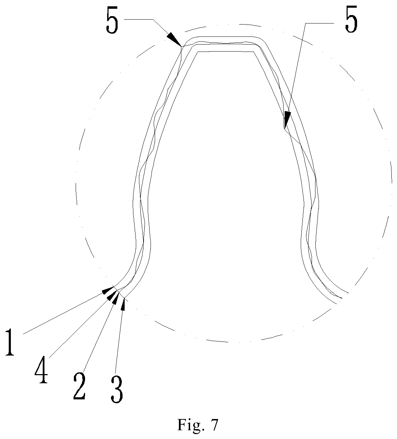

Figure 2-7 represent the schematic diagrams of three assistant faces; by referring to Figure 3, Figure 3 is a partial enlarged drawing of one gear position of the first assistant face, wherein the figure shows four outlines, including a theory line 1 of the standard 3D model, the bias line 3 of the tolerance zone extreme position on the standard 3D model, the central difference line 2 of the middle value of the tolerance zone and actual measurement line 4 of actual model; through the four outlines, it can be judged whether the measurement line 4 exceeds the bias line 3, and the position exceeding the bias 3 is called as the overproof point 5. For example, if the measurement result is existed with one or more overproof point 5, it can be judged that the gear is disagreed with the using requirement.

Based on the same principle, the invention further provides a method for measuring and evaluating gear precision, which is characterized by including the steps of:
a) scanning a tested gear and building up an actual model of the tested gear via scanned data;
b)overlapping the actual model of the tested gear with a standard 3D model;
c)selecting a section of the overlapped model to compare;
d)judging if the point on the actual model section exceeds a tolerance zone selected on the actual model until the minimum tolerance zone corresponding to the actual model is selected; and ranking the tested gear according to the minimum tolerance zone. In this step, one tolerance zone is selected in advance to compare with the actual model; if the measurement result shows that the actual measurement line 4 is within the bias line 3, the other one smaller tolerance zone is selected to compare with the actual model until the minimum tolerance zone corresponding to the actual model is selected; through the minimum tolerance zone, the precision of the tested gear can be ranked.

The measuring and evaluating method provided by the invention has the following advantages:
1. Diversity of instrument selection: it can realize the section scanning and measurement of the gear on a special gear measurement device through upgrading and transformation, and also realize measurement of various gears by mounting a rotating accessory on a general three-coordinate measuring machine. A digital instrument with the circumferential scanning and face-line scanning can realize the measurement task of the most gears; some irregular instruments, such as CT scanning measuring device and scanning electron microscope also can input data developed via special medium face or acquired via scanning to a computer to analyze and apply.
2. Enlarged scale of gear dimension and modulus: the enterprise can solve the measurement difficulty of the large gear through transforming and upgrading the corresponding three coordinates possessed at present, so as to avoid purchasing the special equipment with low utilization rate and high price. The CT scanner and scanning electron microscope can measure the manufactured gear with tiny dimension and modulus, and solve the difficulty that the traditional gear measuring machine is very hard to measure the tooth with less than 0.2 mm modulus and less than 2 mm outside diameter.
3. Simplified quality control of manufacturing process. According to the method, the gear measurement data is direct, visible, simple and easy to understand, requirements on technicians are low, and working efficiency is high.
4. Makeup of shortcomings of traditional measurement method. The traditional gear measurement follows the processing property of the generating method; the tooth error and tooth direction error of the processed tooth have consistent tendency characteristics; in order to improve the measuring efficiency, only four teeth in opposite direction are generally measured to evaluate the tooth form, and other untested teeth only can be defaulted as consistent bias; however, this point is not very applicable to the gear which is not processed by the generating method. Like injection molding plastic gear, powder metallurgy gear and 3D printing gear, the bias of every tooth of the gear processed by these methods may be different and free from the characteristic of consistent direction; therefore, it is not enough to evaluate the bias of four teeth only; independent evaluation of every tooth needs too much measuring time of the gear with multiple teeth, the actual operation is impossible. The method provided by the invention can acquire every data of tooth shape, tooth direction, tooth thickness, point circle, root circle and others of the gear through performing data scanning on upper, middle and lower sections of the tested gear; therefore, the method is convenient, fast and high-efficient.
5. The method fits for the demand of the 3D design mainstream. At present, many products are designed as 3D digital-analog mainly; more and more customers cannot provide the gear paper with comprehensive and accurate parameter; besides, the product design and development cycle is very short as required at present, the advanced development is started after completing the 3D digital-analog, thus the method of scanning measurement is more applicable.

The invention has detailed introduction through the preferable embodiment. However, through learning about the front text, change and increase of every embodiment are visible for ordinary technicians in this domain. The applicant intends to put all of these changes and increases in the scale protected by the claim.

## Claims

1. A method for measuring and evaluating gear precision, which is **characterized by** including the steps of:
a) scanning a tested gear and building up an actual model of the tested gear via scanned data;
b)overlapping the actual model of the tested gear with a standard 3D model;
c)selecting a section of the overlapped model to compare;
d)judging if the point on the actual model section exceeds a tolerance zone selected on the actual model.

2. The method according to claim 1, which is **characterized in that** the tested gear is performed with circumferential scanning, face-line scanning or holographic data scanning in step a).

3. The method according to claim 1, which is **characterized in that** in step b), the overlapping is performed with axis of the standard 3D model according to the actual model.

4. The method according to claim 1, which is **characterized in that** in step c), sections of multiple positions are selected to compare.

5. The method according to claim 4, which is **characterized in that** in step c), the actual model is at least selected to compare with the section in the middle of the standard 3D model.

6. A method for measuring and evaluating gear precision, which is **characterized by** including the steps of:
a) scanning a tested gear and building up an actual model of the tested gear via scanned data;
b)overlapping the actual model of the tested gear with a standard 3D model;
c)selecting a section of the overlapped model to compare;
d)judging if the point on the actual model section exceeds a tolerance zone selected on the actual model until the minimum tolerance zone corresponding to the actual model is selected; and ranking the tested gear according to the minimum tolerance zone.

7. The method according to claim 6, which is **characterized in that** in step b), the overlapping is performed with axis of the standard 3D model according to the actual model.

8. The method according to claim 6, which is **characterized in that** in step c), sections of multiple positions are selected to compare.

9. The method according to claim 8, which is **characterized in that** in step c), the actual model is at least selected to compare with the section in the middle of the standard 3D model.
